# EUROPEAN PATENT SPECIFICATION

(11) **EP 2 106 165 B1**
(45) Date of publication and mention of the grant of the patent: **21.03.2012**
(21) Application number: 08153304.4
(22) Date of filing: 26.03.2008
(51) Int. Cl.: H04W 4/06

(54) **Apparatus and methods for radio resource management for wide area and local area systems**
Vorrichtung und Verfahren zur Funkressourcenverwaltung für Weitbereichsnetz- und Lokalnetzsysteme
Appareil et procédés pour une gestion de ressources radio pour des systèmes de réseau étendu sans fil et réseau local sans fil

(43) Date of publication of application: 30.09.2009
(73) Proprietor: Nokia Siemens Networks Oy, 02610 Espoo (FI)
(72) Inventor: Hämäläinen, Jyri K., 90160, Oulu (FI); Raaf, Bernhard, 82061, Neuried (DE); Sorri, Antti, 00720, Helsinki (FI); Van Phan, Vinh, 90100, Oulu (FI)
(74) Representative: TBK

(56) References cited:
- WO-A-03/021981
- WO-A-2006/099222
- US-A- 5 974 034
- US-A1- 2005 122 928

## Description

### FIELD OF TECHNOLOGY AND BACKGROUND

Flexible spectrum use, FSU, may e.g. be applied for 3GPP long-term evolution release 9, LTE Rel'9. The term FSU broadly refers to any spatially and/or temporarily varying use of radio spectrum/radio resources, e.g., networks of different operators may operate on the same radio spectrum resources. FSU is also an attractive technology initiative from IMT-A perspective. IMT-A stands for IMT Advanced systems; IMT for International Mobile Telecommunications systems such as IMT-2000. IMT-A systems refer to radio access systems beyond IMT-2000 with a new, global, unified wireless architecture which (i) visualizes a hierarchy of interconnected access systems; (ii) envisions new radio interfaces with mobile class targeting for 100Mbps and nomadic/ local-area class targeting for 1Gbps; and (iii) includes operation on new (yet to be assigned) spectrum or frequency bands licensed and maybe unlicensed. Document IST-2003-507581 WINNER D6.1: WINNER Spectrum Aspects: Methods for Efficient Sharing, Flexible Spectrum Use and Coexistence; describes background and general concepts of FSU in IMT-A systems.

FSU concepts in LTE may be realized in connection with e.g. home eNB systems. eNB stands for enhanced node B. Since the interference from privately owned eNB's is difficult to control one shared carrier for eNB's may be used of all operators.

Local area solutions like home eNB's and corporate networks are considered for specific user groups in LTE standardization. In addition to home eNB, incorporating a multimedia broadcast multicast service, MBMS, system into advanced cellular networks provides a possibility to design spectrum usage models. Multimedia broadcast multicast service system is designed for services like mobile TV.

The growing interest towards mobile TV is boosting the MBMS development since in many countries there are not enough DVB-H bands. Therefore 3G LTE MBMS, for example, provides an attractive enabler for mobile TV and other broadcast services.

The IMT-A era offers new bands for wireless mobile systems and due to increasing operation bandwidth regulatory approaches may take place in order to keep the band usage effective. One of the present drawbacks in mobile systems is the spectrum truncation inefficiency, i.e. loss of potential trunking gain, which results from the brick wall band division between operators.

In MBMS a carrier sharing between operators may be provided. Since some or even most of the content such as television, TV, channels are the same in different service packages provided by different operators, it is rather wasteful of spectrum resources if individual operators use a separate MBMS carrier for transmitting same MBMS contents over same certain local service area.

In general, desired practical approaches in flexible spectrum use for specific enough systems of interest such as 3GPP LTE Rel'9 or for future IMT-A systems are still very much open.

The document US 5,974,034 discloses a technique for synchronized wide and local area communications utilizing a single frequency. The document US 2005/0122928 A1 discloses a technique for local and wide area transmissions in a wireless broadcast network. Further conventional techniques are known from the documents WO 2006/099222 A and WO 03/021981 A.

### SUMMARY

According to various aspects of the present invention, there is provided an apparatus of a local area cell, as defined in claims 1 to 5, an apparatus of a wide area cell, as defined in claims 6 to 8, a method, as defined in claims 9 to 12, a method, as defined in claims 13 to 15, and a computer program product, as defined in claims 16 and 17.

Generally, the following aspects are disclosed herein.

In accordance with one or more aspects of the disclosure, a combination of broadcast and unicast systems is provided. A combination of two very different systems in nature, is provided in accordance with one, more or all of the aspects of the disclosure, such as MBMS and local area, LA, systems like LA unicast and terminal-to-terminal communication, T2T, which may be considered while designing IMT-A.

Aspects of the disclosure provide at least one of joint load balancing and radio resource management for wide area (multimedia broadcast multicast service, MBMS) and local area systems.

MBMS load may be varying slowly but in LTE this can be taken into account in system design when sharing the same carrier by MBMS and unicast services.

An arrangement is provided in accordance with one, more or all of the aspects of the disclosure by which traffic can be switched between wide area, WA, and local area, LA, system. Load balancing between unicast and multicast services and even between operators may be provided in accordance with one or more aspects of the disclosure.

Aspects of the disclosure aim at providing evolution alternatives towards more flexible spectrum use in present broadband wireless systems.

Aspects of the disclosure provide arrangements that further extend the flexibility of MBMS system designs to share the same carrier by MBMS and unicast services.

In accordance with one or more aspects of the disclosure, an arrangement is provided where load balancing and radio resource management is enabled between wide area system, preferably broadcast wide area system, and local area, LA, system. A technique regarding compatible frequency hopping patterns in WA and LA systems is used leading to a possibility to share radio resources and convoy control and reference signals between systems. Network and service differentiation may take place in LTE evolution towards IMT-A.

In accordance with at least one or all of the aspects of the disclosure, the disclosure provides an apparatus for a local area cell, comprising at least one of a transceiver for receiving a synchronization signal from a wide area cell, and a synchronization means for synchronizing the transmission of the transceiver depending on the received synchronization signal. The apparatus may be a base station, a node B, an evolved Node B, or a part of a base station such as a chipset or module.

In accordance with at least one or more aspects of the disclosure, a network is provided which comprises at least one local area cell comprising a base station. The network may have at least two local area cells, wherein adjacent cell borders are closely spaced, adjoining, or overlapping. The network may further comprise at least one wide area cell having e.g. a base station for transmitting the synchronization signal.

The network may comprise at least one or more, in any arbitrary combination, of:
two or more carriers (f1, f2) are provided in the wide area and local area cells;
the wide area cell provides multimedia broadcast multicast service;
wide area cell operation and/ or local area cell operation is adapted to hop between frequencies (f1 and f2);
hopping pattern of the local area cell is synchronized with wide area hopping pattern;
when the wide area cell operates on frequency (f1), local area cell operates on another frequency (f2) or is in receiving/listening mode;
a subframe of a transmission signal of the wide area cell provides the synchronizing signal for a frequency, and another subframe provides the synchronizing signal for another frequency;
the synchronization signal is transmitted continuously;
information on the hopping pattern is sent to the local area cell through wired connection or through a broadcast control channel;
broadcast control information contains any one or more, in any arbitrary combination, of information on hopping patterns, subframes that are allowed for T2T communication, allowed transmission powers in T2T, additional guard times/frequencies and any other information that may enable/support T2T communication;
carriers are carriers for MBMS, or are wide area or local area unicast carriers;
the load balancing/radio resource management that is based on different frequency hopping patterns is used between MBMS and local area, between two or more wide area unicast systems, or between wide area unicast system and local area system, or between MBMS and wide area unicast system.

In accordance with one or more aspects of the disclosure, a base station of a wide area cell may optionally be used in a network as mentioned above, comprising a transceiver for transmitting a synchronization signal to a base station of a local area cell, and a synchronization signal generator for generating the synchronization signal.

In accordance with at least one or more aspects of the disclosure, a method is provided for receiving a synchronization signal from a base station of a wide area cell, and for synchronizing a signal from a local area cell depending on the received synchronization signal.

The method may comprise at least one or more, in any arbitrary combination, of:
two or more carriers (f1, f2) are transmitted in the wide area and local area cells;
multimedia broadcast multicast service is provided in the wide area cell;
wide area cell operation and/ or local area cell operation is hopping between frequencies (f1 and f2);
hopping pattern of the local area cell is synchronized with the hopping pattern of the wide area cell;
when the wide area cell operates on frequency (f1), local area cell operates on another frequency (f2) or is in receiving/listening mode;
a subframe of a transmission signal of the wide area cell provides the synchronizing signal for a frequency, and another subframe provides the synchronizing signal for another frequency;
the synchronization signal is transmitted continuously;
information on the hopping pattern is sent to the local area cell through wired connection or through a broadcast control channel;
broadcast control information contains any one or more, in any arbitrary combination, of information on hopping patterns, subframes that are allowed for T2T communication, allowed transmission powers in T2T, additional guard times/frequencies and any other information that may enable/support T2T communication;
carriers are carriers for MBMS, or are wide area or local area unicast carriers;
the load balancing/radio resource management that is based on different frequency hopping patterns is used between MBMS and local area, between two or more wide area unicast systems, or between wide area unicast system and local area system, or between MBMS and wide area unicast system.

In accordance with at least one or more aspects of the disclosure, a computer program product is provided which comprises code means configured to carry out or implement, when run on a processor, a method as mentioned above. The computer program product may be embodied on a computer-readable medium.

Aspects of the disclosure are capable of reducing a truncation loss or trunking loss, i.e. a loss of potential trunking gain, and thus can increase the efficiency.

Other objects, features and advantages of the invention will become apparent from the following description of aspects of the disclosure.

### BRIEF DESCRIPTION OF DRAWINGS

Fig. 1 illustrates a graph of wide area and local area broadcast and unicast;
Fig. 2 shows a graph of shared and dedicated carriers and single/multicell operation;
Fig. 3 illustrates an example of general transmission time frames of MBMS and unicast in a wide area system and a local area system; and
Fig. 4 shows an example of wide area and local area cells;
Fig. 5 illustrates an embodiment of the invention showing synchronization of local area transmission;
Fig. 6 shows a further embodiment of the invention, illustrating the arrangement of LA and WA cells;
Fig. 7 illustrates another embodiment of the invention showing synchronization of local area transmission;
Fig. 8 shows a further embodiment of the invention, illustrating the arrangement of LA and WA cells;
Fig. 9 illustrates another embodiment of the invention showing synchronization of local area transmission;
Fig. 10 shows a further embodiment of the invention, illustrating the arrangement of LA and WA cells;
Fig. 11 illustrates an embodiment of the invention showing synchronization of local area transmission; and
Fig. 12 shows a further embodiment of the invention.

### DESCRIPTION OF EMBODIMENTS

Embodiments provide flexible spectrum use for MBMS, Unicast, wide area, WA, and local area, LA.

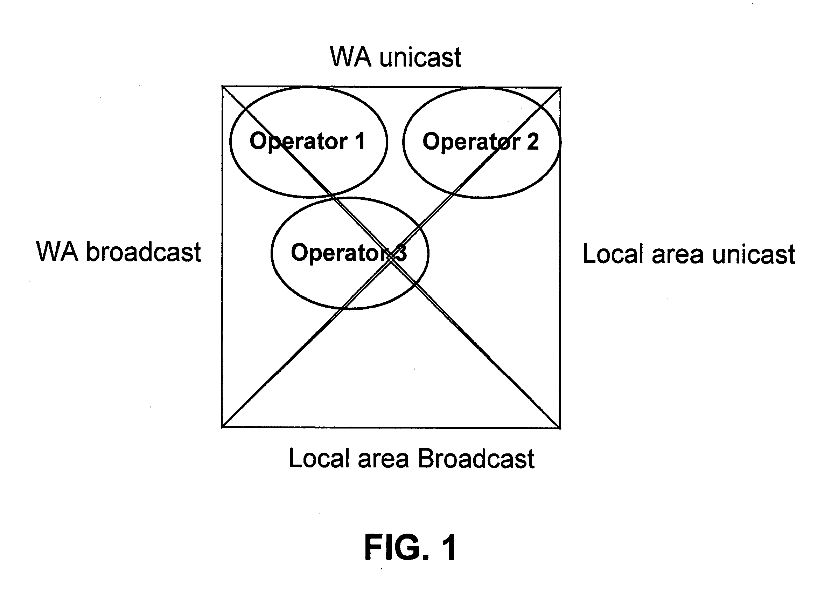

Fig. 1 illustrates a basic diagram showing spectrum resource usage and operators interests/needs. Fig. 1 shows four triangular fields of WA broadcast, WA unicast, Local area Broadcast, and Local area unicast.

WA broadcast is a growing business, WA unicast is presently a mainstream business. Local area unicast is a highly potential business, and Local area Broadcast provides additional opportunities.

Fig. 1 shows several operators operator1, operator2, operator3, the ovals indicating the usage of the four segments. Operator1 provides both WA broadcast and WA unicast services. Operator2 provides WA unicast and local area unicast services whereas operator3 provides all four of WA broadcast services, WA unicast services, LA broadcast and local area unicast services. In Fig. 1, two or more operators can have overlapping service area.

Usually, operators build their business on different strategies. By creating consortiums, operators may fit their different needs to the price/availability of natural resources (spectrum) and infrastructure (networks). Brick wall band division may lead to "truncation loss" or "trunking loss", i.e. to loss of potential trunking gain, and thus to reduced efficiency. Embodiments of the invention can reduce this loss of potential trunking gain, and thus increase the efficiency.

In the following, example embodiments of coupling broadcast, unicast and WA/LA with possible sharing across different operators' will be described. As background, operators may want both point-point and (enhanced) broadcast delivery of services. MBMS may only represent a smaller fraction of the cases but is essential for the overall business service. Digital video broadcast handheld, DVB-H, on broadcast bands may not serve all operators due to spectrum ownership issues.

Some operators in 3GPP specifically require the provision of a separate carrier for Mobile TV purposes, leading to dedicated carrier MBMS. MBMS in IMT-A provides several advantages such as using IMT-A spectrum which can enable growth of next generation mobile broadcasting services. Success of mobile broadcasting services like mobile TV may create a disruption to the spectrum need, necessitating more spectrum for broadcasting services soon.

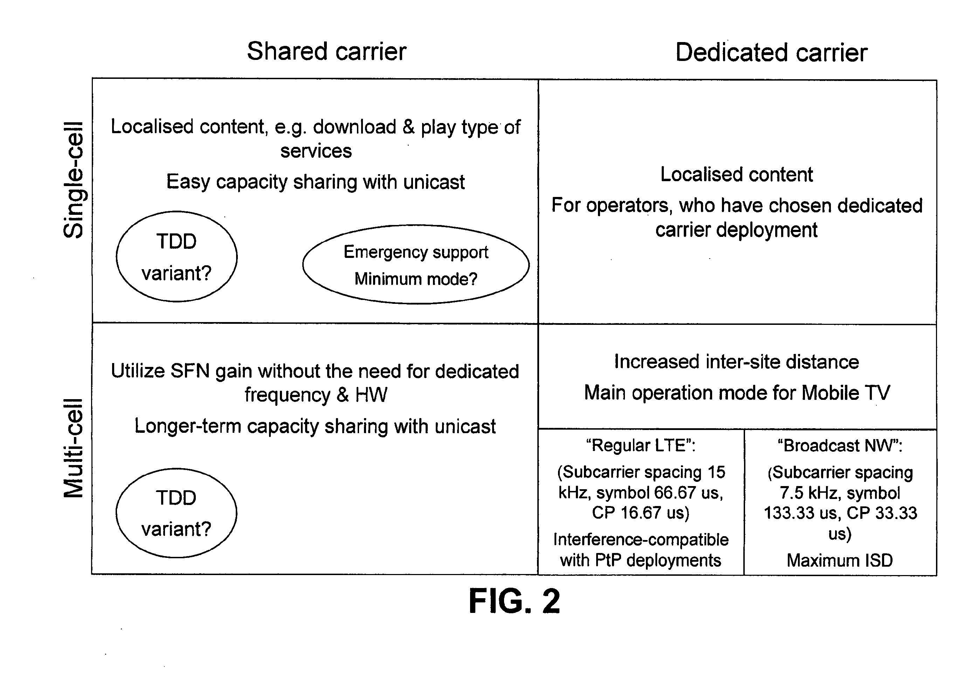

Fig. 2 illustrates a matrix graph of LTE MBMS Deployments, having two columns, shared carrier, dedicated carrier, and two rows Single-cell, Multi-cell.

As shown in Fig. 2, in the matrix field crossed by the column shared carrier and the row single cell, localised content may be provided, e.g. download & play type of services. Capacity sharing with unicast is easy. Time division duplex, TDD, variant and emergency support may be provided, e.g. in minimum mode.

In the matrix field crossed by the column shared carrier and the row multi-cell, SFN gain may be utilized without the need for dedicated frequency & hardware. Longer-term capacity sharing with unicast may be provided. A TDD variant may be employed.

The matrix field crossed by the column dedicated carrier and the row single cell indicates provision of localised content, for example for operators who have chosen dedicated carrier deployment.

In the matrix field crossed by the column dedicated carrier and the row multi-cell, increased inter-site distance can be achieved. This field may represent a main operation mode for mobile TV. Subfields of this matrix field include, as indicated in Fig. 2, "Regular LTE" e.g. with subcarrier spacing 15 kHz, symbol 66.67 us, CP 16.67 us, with interference-compatibility with point to point, PtP, deployments; and "Broadcast network, NW", with e.g. a subcarrier spacing 7.5 kHz, symbol 133.33 us, CP 33.33 us, and maximum inter-site distance, ISD

In the following, some LTE MBMS characters will be described. Content may be partly the same for different service providers e.g. TV channels, but may differ on service/location basis. Regarding traffic, variations in MBMS traffic load are slow and predictable (if no reverse channel is present). In case of collaboration, operators may share MBMS carriers and hardware, HW. As to technical issues, in single frequency network, SFN, multi-cell mode cells are synchronized. There is no need for reverse channel. Unpaired bands will suffice. Frame structures follow LTE unicast frame structures. In shared mode, a multicast channel, MCH, is time multiplexed. MBMS may be provided for both frequency division duplex, FDD, and time division duplex, TDD.

Combining MBMS + Local Area, i.e. broadcast and local area systems, brings several advantages. MBMS provides means for synchronization to local area systems. Global synchronization is one of the main problems in LA systems (if cells are not isolated). It enables efficient resource usage and interference management. Traffic variations in MBMS are well predictable so that a long term resource splitting between WA/LA and BC/unicast operations can be provided. MBMS is designed for shared operations (unicast + broadcast). Some technical enablers are already embedded into LTE specifications. The arrangement shown in Fig. 2 may also be considered for the current LTE Rel'8 MBMS deployment. Note, that embodiments of the invention extend much further into, and can be used with or applied to other systems, apparatuses, Releases etc, e.g. to multi-carriers (frequency hopping), multi-systems (WA & LA), and multi-operators; all in the context of FSU. Thus, embodiments are applicable to multi-cell cases in addition to single cell cases.

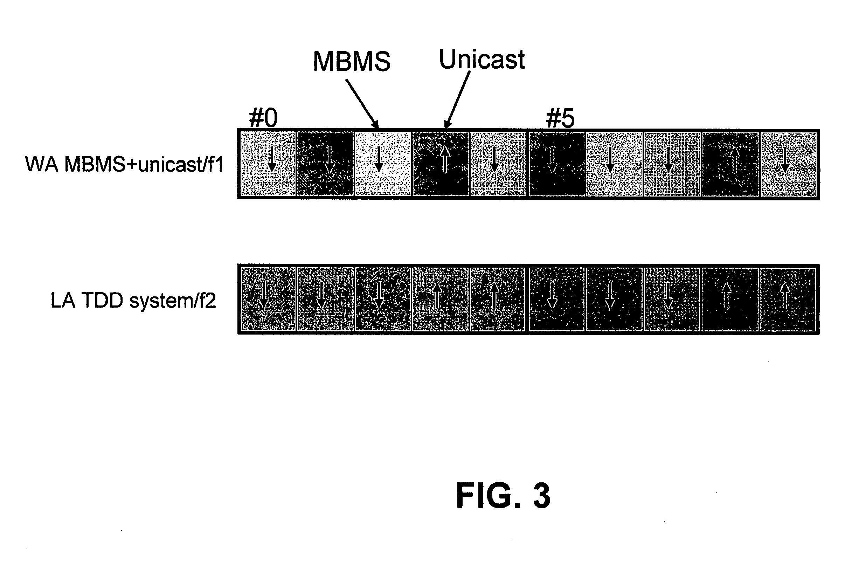

Fig. 3 shows an implementation of MBMS and LA on their own carriers. The upper line of Fig. 3 illustrates WA MBMS+unicast at frequency f1. The arrows pointing downwards represent MBMS transmissions whereas the arrows pointing upwards represent unicast transmissions. The lower line of Fig. 3 illustrates LA TDD at frequency f2.

In such a structure, the LA system is provided, in accordance with embodiments of the invention, with a synchronization reference if inter-cell coordination is desired.

In Fig. 3, there is low load on unicast transmission. Unicast for large area is cost efficient. As to technical characters, sharing between MBMS and unicast can be changed. Part of the unicast traffic can be switched to LA or, on the other hand, LA can be deployed in WA carriers by utilizing only remaining unused spectrum resources of WA carriers.

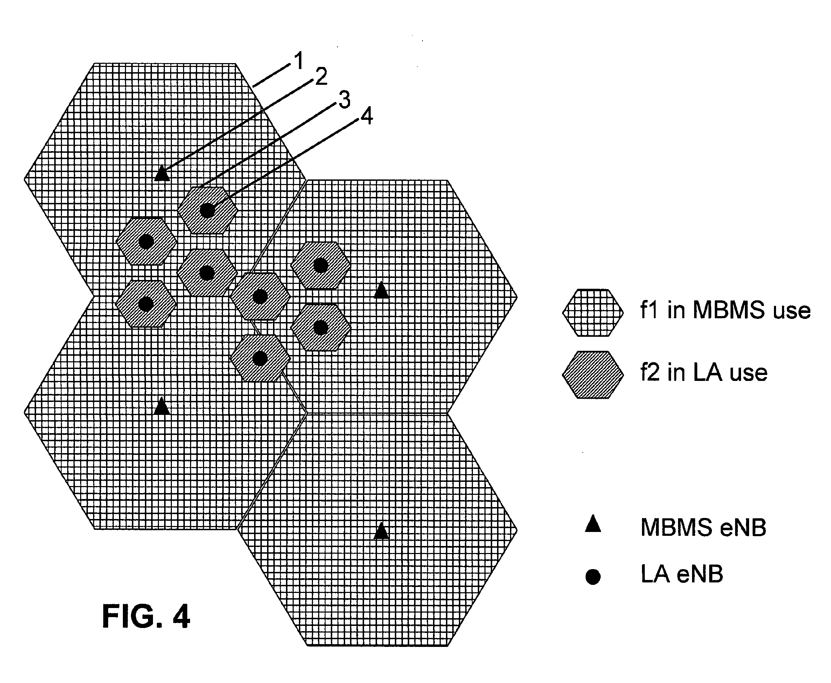

In conventional arrangement there are separate carriers for MBMS/WA unicast and for the LA unicast (and possible LA broadcast). In LA systems, accurate synchronization is difficult to achieve due to lack of global reference. This may lead to an inefficient LA system such as shown in Fig. 4. Unpaired spectrum for both unicast and broadcast is assumed due to present understanding regarding the potential IMT-A spectrum.

FIG. 4 illustrates a case of broadcast, BC, + unicast transmission when no synchronization is provided in LA. The LA cells are shown in Fig. 4 by hatched inclined lines, using f2 in LA. The larger MBMS cells are marked by grid lines, as shown in Fig. 4 for f1 in MBMS use. The centers of the MBMS cells are symbolized by triangles indicating MBMS eNodes B, eNBs, whereas the centers of the local area cells are symbolized by points indicating LA eNodes B. Without synchronization the LA cells may have needed some guard space, as shown, due to inter-cell interference, especially when using TDD.

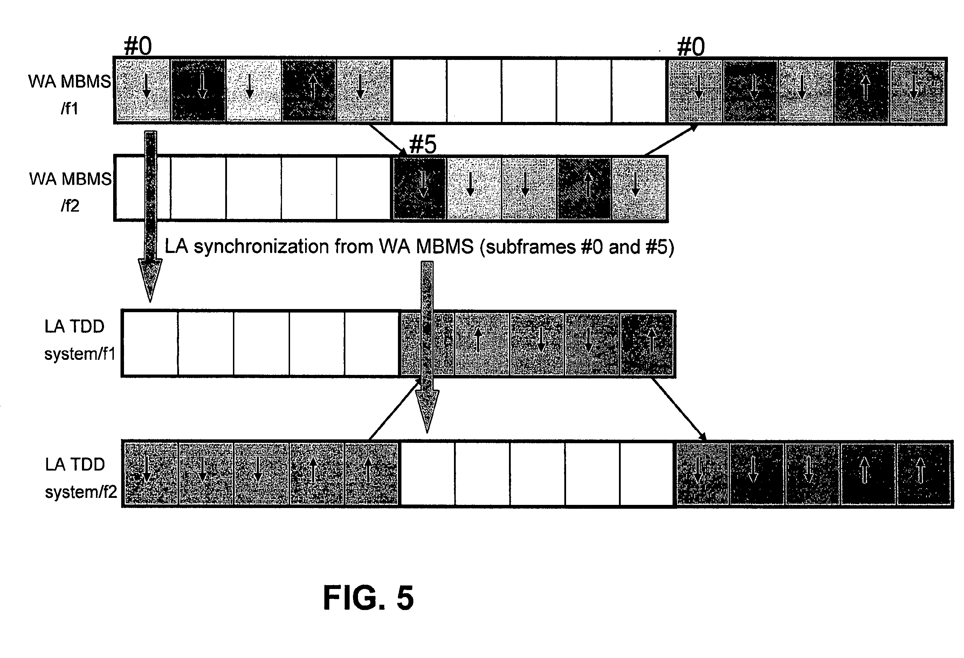

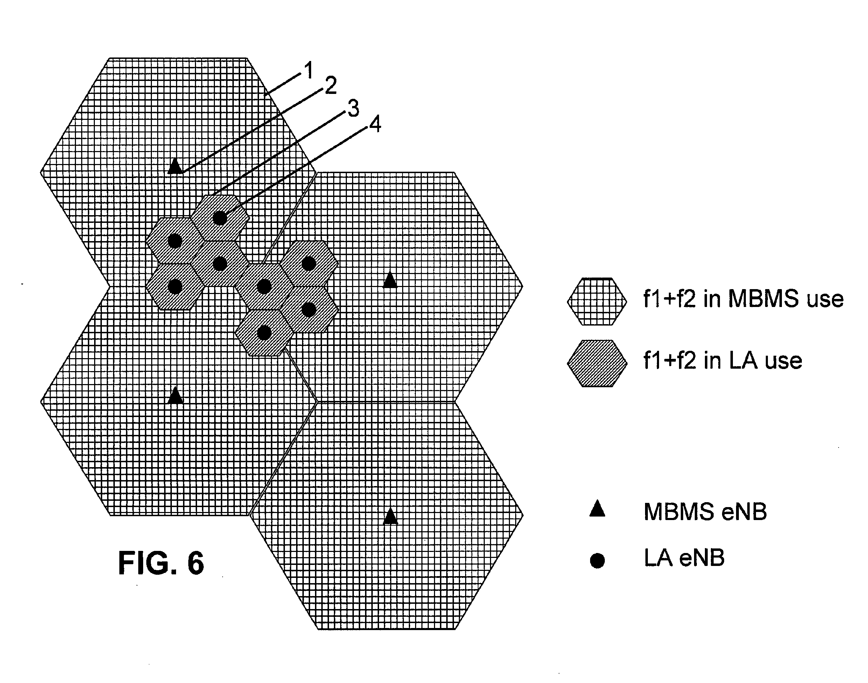

Figs. 5, 6 show an embodiment of the invention providing a two-carrier MBMS scenario. The embodiment solves the problem that the LA inter-cell interference may otherwise become a bottleneck. Carrier frequencies f1+f2 are used in MBMS, and also in LA. Fig. 6 illustrates MBMS eNBs 2 (triangles) and LA eNBs 4 (circular points). The WA cells 1 are controlled and defined by the wide area eNBs 2. The LA cells 3 are controlled and defined by the local area eNBs 4.

A wide area MBMS at carrier frequency f1 is shown in the upper line of Fig. 5, having several subframes #0 etc. Further, second carrier f2, WA MBMS/f2, is shown in the second line. The third and fourth lines show a LA TDD system/f1, and a LA TDD system/f2, respectively.

LA synchronization is provided from WA MBMS (subframes #0 and #5), as shown. In detail, LA synchronization is provided from WA MBMS f1 (subframe #0) to LA TDD system f1, and from WA MBMS f2 (subframe #5) to LA TDD system f2, as shown in Fig. 5 by thick vertical arrows.

The embodiment of Figs. 5, 6 comprises no multi-carrier transmission in MBMS but switching of transmission frequency in MBMS eNB 2, represented by triangles in Fig. 6.

Frequency hopping is used in the LA system which is shown in Fig. 6 with inclined hatch lines.

In synchronization (#0 for f1, #5 for f2) receiving is on one frequency and transmitting on another frequency. Alternatively, it is possible to hold LA transmission during synchronization, loosing some LA resources.

LA use of f1 and f2 by different operators is possible but may lead to a 5 subframe delay.

FIG. 6 shows a broadcast + unicast illustration with synchronization in LA. With synchronization LA TDD cells can be used more effectively, as shown in Fig. 6 illustrating a closer packing of the LA cells 3 with no extra space between the borders of the LA cells.

LA systems can benefit from coexistence with MBMS. A multi-cell network with dedicated MBMS carrier allows high-tower antenna(s) and high transmitting power. Hardware- and carrier shared with multiple operators enables transmitting same content from one source and having spare carrier spectrum resources for LA system deployment. Efficient resource dimensioning is possible regarding fixed resource demand for most common content, e.g. some TV channels etc. Variable resource demand from operators own services can be coped with, reserving e.g. some part of the resource for unicast.

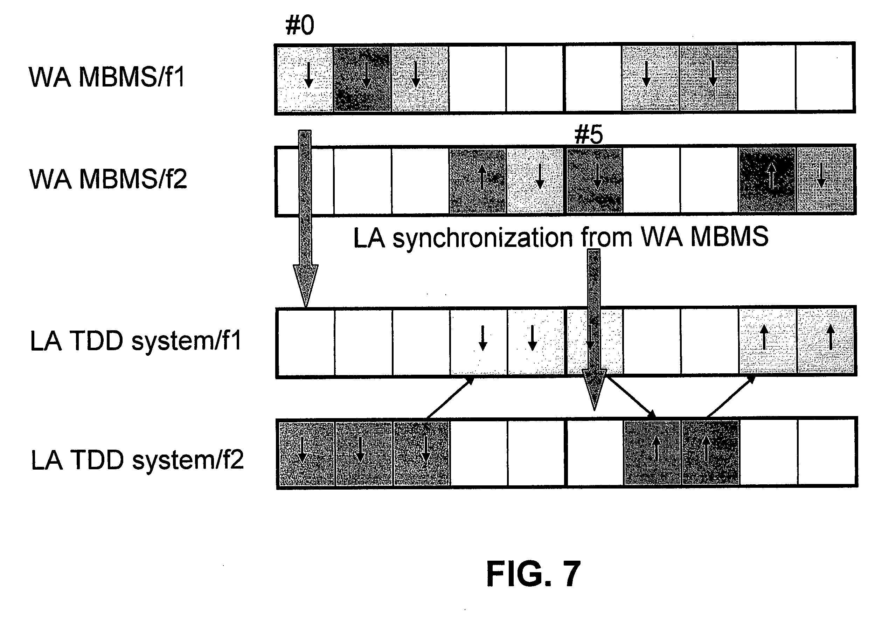

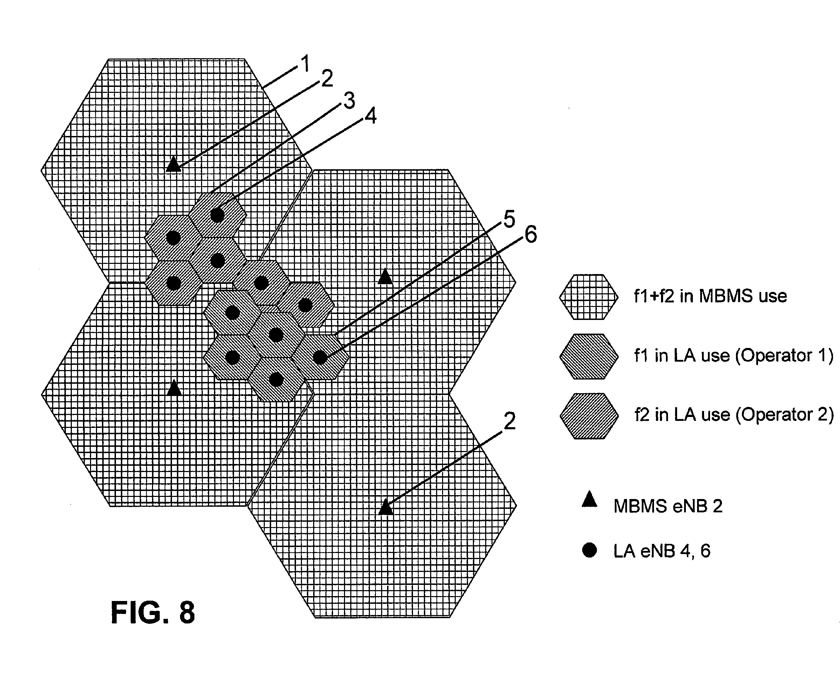

Figs. 7, 8 illustrate an embodiment in accordance with the invention, with two-carriers f1, f2 of MBMS cells. In this embodiment, two LA networks are provided with overlapping coverage area.

Carrier frequencies f1+f2 are used in MBMS, and also in LA. Fig. 8 illustrates MBMS eNBs 2 (triangles) and LA eNBs 4 (circular points).

A wide area MBMS at carrier frequency f1 is shown in the upper line of Fig. 7, having several subframes #0 etc. Further, second carrier f2, WA MBMS/f2, is shown in the second line. The third and fourth lines show a LA TDD system/f1, and a LA TDD system/f2, respectively.

LA synchronization is provided from WA MBMS f1 (subframe #0) to LA TDD system f1, and from WA MBMS f2 (subframe #5) to LA TDD system f2, as shown in Fig. 7 by thick vertical arrows. LA use of f1 and f2 by different operators is possible, as shown in Fig. 8. Frequency f1 is used by operator 1 for local area use in LA cells 5 marked by inclined lines leading in the downward direction from left to right. The LA cells 5 are controlled and defined by local areas eNBs 6. Frequency f2 is used by operator 2 for local area use in LA cells 3 marked by inclined lines leading in the upward direction from left to right. The LA cells 3 are controlled and defined by local areas eNBs 4.

No multi-carrier transmission in MBMS, only switching of transmission frequency in MBMS eNB 2 may be provided. Frequency hopping is used in LA system 3, 5.

LA synchronization is provided from WA MBMS, e.g. in subframes #0 and #5, as shown. In detail, LA synchronization of LA TDD system f1 is provided from WA MBMS f1 subframe #0, and LA synchronization of LA TDD system f2 is provided from WA MBMS f2 subframe #5, as shown in Fig. 7 by thick vertical arrows.

The carrier frequencies f1 and f2 can be used by different operators or even by different systems such as terminal to terminal, T2T, communication.

Fig. 8 illustrates BC + unicast with synchronization in LA. With synchronization the LA TDD cells 3, 5 can be used more effectively.

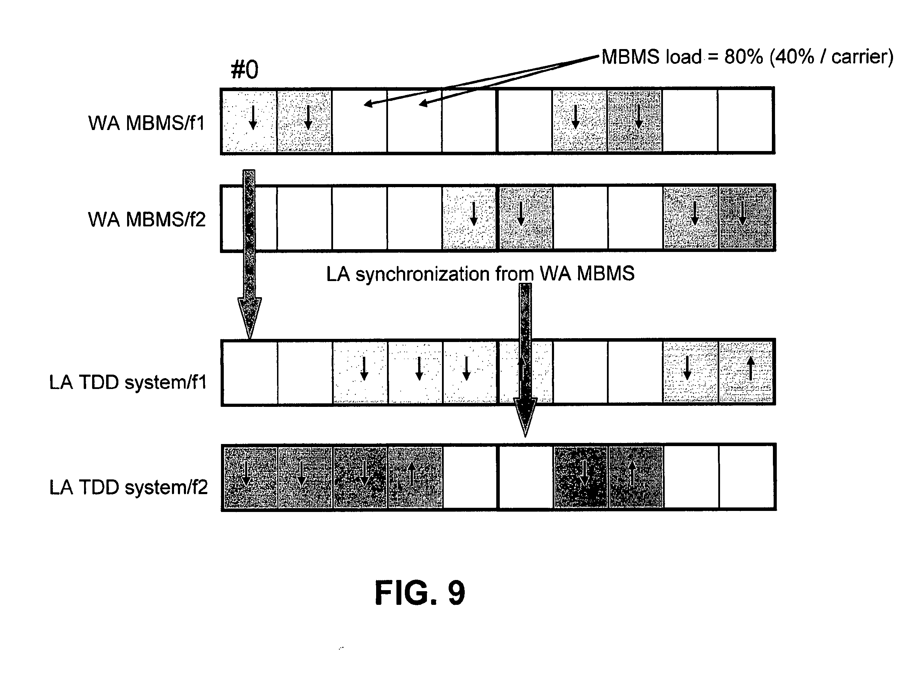

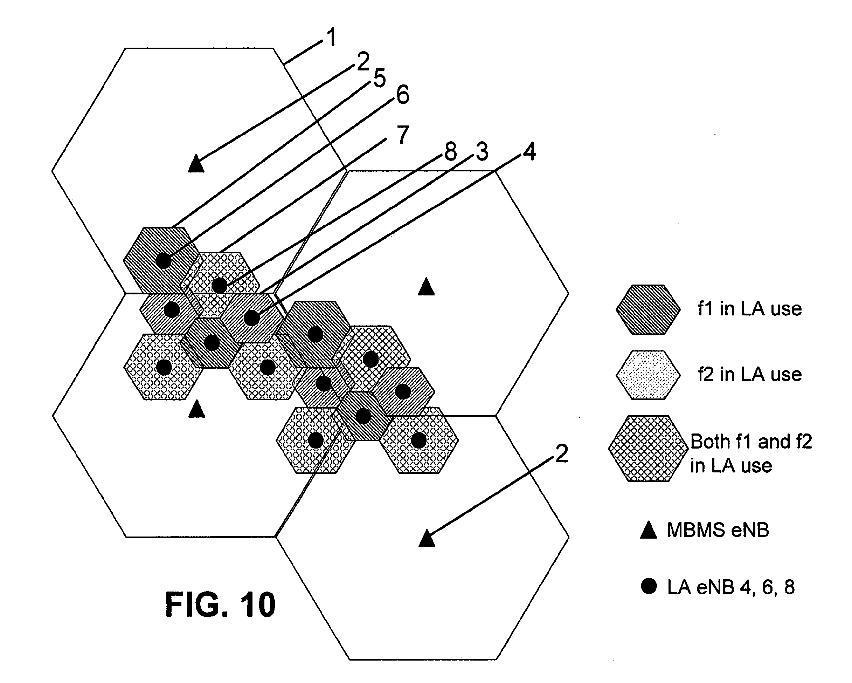

Figs. 9, 10 show a further embodiment in accordance with the invention s, using a two-carrier MBMS scenario. MBMS load of WA MBMS f1 is 80% (40% / carrier) in the embodiment of Figs. 9, 10. LA synchronization is from WA MBMS.

In this embodiment unicast traffic is transferred to separate unicast carrier e.g. when demand for unicast is decreasing, and MBMS load is increasing and/or LA load is changing. The embodiment provides the possibility to easily increase the LA capacity. No continuous transmission on MBMS carriers is necessary.

Carriers f1 and f2 can be used by different operators or even by different systems (T2T communication).

Figs. 9, 10 show an embodiment of the invention providing a two-carrier MBMS scenario. The embodiment solves the problem that the LA inter-cell interference may become a bottleneck. Carrier frequencies f1+f2 are used in MBMS, and also in LA. Fig. 10 illustrates MBMS eNBs 2 with triangles, and LA eNBs 4, 6, 8 with circular points. The WA cells 1 are controlled and defined by the wide area eNBs 2. The LA cells 3, 5, 7 are controlled and defined by the local area eNBs 4, 6, 8, respectively.

A wide area MBMS at carrier frequency f1 is shown in the upper line of Fig. 9, having several subframes #0 etc. Further, second carrier f2, WA MBMS/f2, is shown in the second line. The third and fourth lines show a LA TDD system/f1, and a LA TDD system/f2, respectively.

LA synchronization is provided from WA MBMS (subframes #0 and #5), as shown. In detail, LA synchronization is provided from WA MBMS f1 (subframe #0) to LA TDD system f1, and from WA MBMS f2 (subframe #5) to LA TDD system f2, as shown in Fig. 9 by thick vertical arrows.

Frequency f1 is used 1 for local area use in LA cells 5 marked by inclined lines leading in the downward direction from left to right. The LA cells 5 are controlled and defined by local areas eNBs 6. Frequency f2 is used for local area use in LA cells 3 marked by inclined lines leading in the upward direction from left to right. The LA cells 3 are controlled and defined by local areas eNBs 4.

Both frequencies f1 and f2 are used for local area in LA cells 7 marked by crossed lines. The LA cells 7 are controlled and defined by local areas eNBs 8.

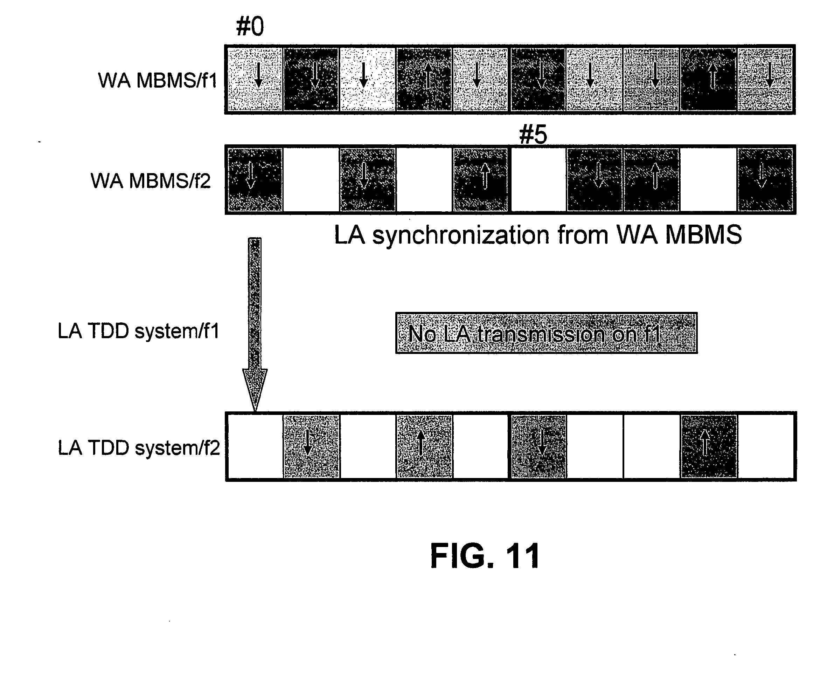

FIG. 11 shows an embodiment in accordance with the invention, comprising two-carrier MBMS. In this embodiment the LA capacity is reduced so as to provide increasing capacity for BC/unicast on WA. Multi-carrier transmission is effected by MBMS eNB. Discontinuous transmission on WA unicast carrier is provided as shown by blank fields in the second line of Fig. 11. No frequency hopping in LA system but low capacity.

A wide area MBMS at carrier frequency f1 is shown in the upper line of Fig. 11, having several subframes #0 etc. Further, second carrier f2, WA MBMS/f2, is shown in the second line. The third line is blank as there is no LA transmission on f1. The fourth line of Fig. 11 shows a LA TDD system/f2, respectively.

LA synchronization is provided from WA MBMS (subframe #0), as shown. In detail, LA synchronization is provided from WA MBMS f2 (subframe #0) to LA TDD system f2, as shown in Fig. 11 by a thick vertical arrow.

In accordance with one, more or all embodiments of the invention, at least one or more of the following features are provided in any arbitrary combination.

In MBMS TDD mode may be used with frequency hopping and no continuous common pilot transmission. Alternatively or additionally frequency hopping may be used, for example between two frequencies, but frequency hopping can also be extended up to 10 frequency bands. A TDMA resource partition between MBMS and LA system may be implemented. Transmission on one carrier at a time may be employed, without need for simultaneous transmission on multiple carriers.

A LA synchronization reference is provided from MBMS transmission, enabling global synchronization on local areas LA. The synchronization reference may in principle be used by home eNB's. A home eNB may relay MBMS transmission partly, in particular when dual band capability is available.

Terminal to terminal communication is also enabled. MBMS capable terminals may use synchronization and knowledge about free time periods for point to point communication with other terminals.

Technical features of MBMS and LA may comprise one or more of the following. The LA system is in receiving, RX, mode during MBMS synchronization signal. LA nodes 4, 6, 8 do not operate during MBMS transmission so as to avoid interference. Some predefined MBMS subframes can be used to carry control information to LA system. An additional synchronization signal may be needed and provided. Radio resource sharing notifications may be implemented so as to indicate coming changes in case of T2T communication.

As to LA system, TDD mode, or other mode, may be used. Different operators may use different carrier frequencies on LA or share radio resources of two carriers. Hardware sharing between LA operators may take place. Operator separation may be also based on geographical areas. LA system may also act as an half duplex decode and forward relay that distributes MBMS content locally. With higher signal to interference plus noise ratio, SINR, less resources are needed for LA distribution, and some resources are left to unicast operations.

In accordance with at least one or all of the embodiments of the invention, flexible spectrum use, FSU, is provided between broadcast, BC, unicast, wide area WA, and local area, LA.

MBMS and unicast may share the same carrier. In another embodiment, MBMS carrier + HW may be shared by different operators. In case of a high power, high tower MBMS, LA extensions may be needed due to geographically varying traffic load. Using two or more carriers in MBMS eNB's and frequency hopping, a synchronization reference for LA system can be provided. Part of the radio resources are reserved for LA use. Load balancing between BC, unicast and WA, LA is enabled.

From a business perspective, operators may form consortiums and share spectrum resources that are used for MBSM, unicast and LA access. Mutual division between MBMS, unicast and LA can be decided e.g. by a consortium, based on user demand. In local area, LA, system there can be HW sharing (one network) or flexible spectrum use, FSU, in case of different networks.

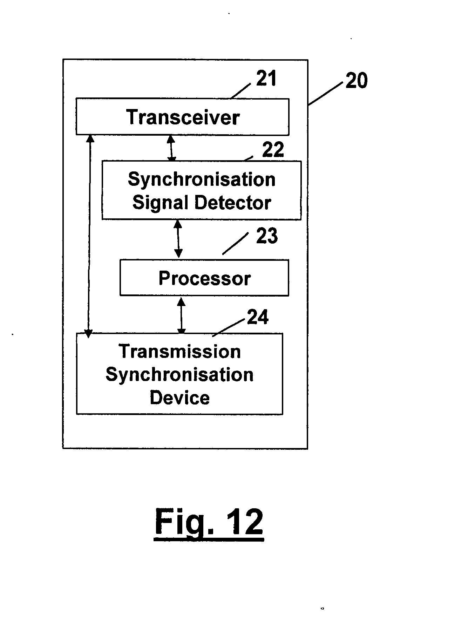

Fig. 12 illustrates an embodiment of an apparatus 20 such as a base station, node B, evolved node B, for example an eNode B 4 as shown in Figs. 6, 8, 10, or any other type of base station, in accordance with one or more embodiments of the invention. The base station or eNode B can be implemented or used in accordance with embodiments of the invention. Fig. 12 shows an implementation in accordance with one, more or all of the embodiments of the invention which involves a transceiver 21 for transmitting and receiving signals via air interface, a synchronization signal detector 22, a processor 23 for at least one of controlling operation of the base station or part thereof, and of signal processing, and a transmission synchronization device 24. The synchronization signal detector 22 is adapted to detect a synchronization signal received from a wide area cell such as cell 1 or eNode B 2 or another base station. This received synchronization signal is used in transmission synchronization device 24 for synchronizing the transmission and receipt of signals in the local area cell 3, 5, 7 by the respective base station or eNode B 4, 6, 8.

A base station such as node B or eNB 2 of a wide area cell 1 may have the same or a similar structure as the one shown in Fig. 12 wherein a synchronization signal generator is provided instead of a synchronization signal detector 22.

In accordance with one, more or all of the embodiments of the invention, an arrangement may comprise at least one or more, in any arbitrary combination, of:
two carriers f1, f2 are in both Wide Area (MBMS/unicast) and Local Area use;
the proposed system can be extended to more than 2 carriers;
MBMS is taken as a starting point since MBMS carrier can be shared by more than one operator;
same operators (or other operators) may then operate LA system(s);
WA (MBMS/unicast) operation (Tx, Rx) is hopping between frequencies f1 and f2;
LA operation (Tx, Rx) is also hopping between frequencies f1 and f2;
hopping is synchronized with WA hopping pattern;
when WA system operates on f1, LA operates on f2 or is in receiving/listening mode;
WA system synchronization signal is received by LA system;
optionally subframe #0 is used for this purpose on f1 and subframe #5 on f2;
synchronization signal from WA system enables LA to synchronize its operations with WA system;
achieved synchronization between LA eNB's (or terminals in T2T) is used to enhance the efficiency in use of radio resources, e.g. in Fig. 11;
in Fig. 11, WA eNB is not transmitting on two carrier simultaneously (no PAR problem/PA dimensioning problem);
in the embodiment of Fig. 11 but optionally also in one or more of the other embodiments, WA eNB is transmitting continuously so that there is no power ramping, providing a more efficient implementation) ;
LA system can either be in receiving mode (in both f1 and f2) when synchronization signal is transmitted from WA eNB or it can receive on one frequency and transmit on another frequency; if adjacent frequencies are used problems may occur;
LA system can also ignore part of the synchronization signals and update its synchronization only once a while; being feasible e.g. or especially if LA eNB is fixed;
the hopping patterns can be changed by network operator;
a change of hopping pattern is informed to the LA system;
if WA and LA operate under the same RAN then changes in hopping patterns can be informed through wired connection; if WA and LA are connected to different RAN's, then information can be conveyed e.g. through broadcast control channel;
LA system can be a T2T ad hoc network;
the WA system may provide broadcast control information through radio resources that are dedicated for that purpose, e.g. when LA system is a T2T ad hoc network;
this BC control can contain any one or more, in any arbitrary combination, of information on hopping patterns, subframes that are allowed for T2T communication, allowed transmission powers in T2T, additional guard times/frequencies and any other information that may enable/support T2T communication;
in the embodiment of Fig. 7, different frequency hopping pattern is used;
different frequency hopping pattern is more suitable if carriers 1 and 2 are used by different operators on LA; different frequency hopping pattern enables the overlapping LA networks of two different operators as shown in Fig. 8;
in the embodiment of Fig. 9, a case is illustrated where load in WA carrier is decreasing or decreased; then load in LA can be increased and better support for simultaneous operation by two operators is provided;
in the embodiment of Fig. 11, the load in WA system is increasing or increased, and load in LA system is decreasing or decreased;
instead of MBMS there can be WA and LA unicast carriers f1 and f2;
LA system may decode and forward part of the MBMS signal and act as a half duplex radio relay;
LA system may contain a Home eNB's and/or one or more relay nodes/wireless eNB's;
radio resources that are shared between WA and LA system can be also used by radio relays for wireless backhaul communication;
the proposed load balancing/radio resource management that is based on different frequency hopping patterns can be also used between two or more WA unicast systems or between WA unicast system and LA system or between MBMS and WA unicast system.

Generally, spectrum sharing, SS, refers to situations in which different (sub-) systems utilize the same part of spectrum in a coordinated or uncoordinated manner. A special case is sharing based on FSU. Typically these systems are based on similar technology and offer similar services, e.g., different operators sharing the same spectrum by utilizing dynamic channel assignment from a common pool of channels.

Embodiments may be partly standard related. Joint use between operators is possible on mutual agreement basis. Embodiment may be considered for 3GPP LTE Rel'9 standardization and later in IMT-A standardization.

For the purpose of the present invention as described herein above, it should be noted that any access or network technology may be used which may be any technology by means of which a user equipment can access a network. The network may be any device, unit or means by which a mobile or stationary entity or other user equipment may connect to and/or utilize services offered by the network. Such services may include, among others, data and/or (audio-) visual communication, data download etc.

Generally, the present invention is also applicable in those network/terminal environments relying on a data packet based transmission scheme according to which data are transmitted in data packets and which are for example based on the Internet Protocol IP. The present invention is, however, not limited thereto, and any other present or future IP or mobile IP version, or, more generally, a protocol following similar principles is also applicable. The user equipment entity may be any device, unit or means by which a system user may experience services from a network.

The sequence of method steps described above or shown in the drawings can be implemented in any other sequence arbitrarily deviating from the above described or shown sequence of steps. Further, the method, apparatuses and devices, may include only one, more or all of the features described above or shown in the drawings, in any arbitrary combination. The method steps may be implemented as software code portions and be run using a processor at a network element or terminal, can be software code independent, or can be specified using any known or future developed programming language as long as the functionality defined by the method steps is preserved. Generally, any method step is suitable to be implemented as software or by hardware without changing the idea of the present invention in terms of the functionality implemented. Devices, apparatus, units, or means, and/or method steps may be implemented as hardware components of a stationary or mobile station, or a terminal, or a network element, or part, or chipset, or module thereof, which part, or chipset, or module e.g. be used for an apparatus; may be hardware independent; and may be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components. Devices, apparatus, units or means (e.g. User equipment, CSCF) can be implemented as individual devices, units, means, chipsets, modules, or part of devices, and may also be implemented in a distributed fashion throughout a system, as long as the functionality of the device, unit or means is preserved.

### List of abbreviations

- FSU: Flexible Spectrum Use
- eNB: LTE node B
- TDMA: Time division multiple access
- TDD: Time division duplex
- FDD: Frequency division duplex
- WA: Wide Area
- LA: Local Area
- T2T: Terminal to terminal
- RAN: Radio access network
- MBMS: Multimedia broadcast multicast service

## Claims

1. An apparatus (4, 6, 8) of a local area cell (3, 5, 7), comprising
a transceiver (21) for receiving a synchronization signal from a base station (2) of a wide area cell (1), and
a synchronization means (24) for synchronizing the transmission of the transceiver (21) depending on the received synchronization signal,
**characterized in that**
the wide area cell is configured to provide a multimedia broadcast multicast service using two or more frequency carriers, and
the synchronization signal is configured such that the transceiver is synchronized to operate, at any time, on another frequency carrier than the base station of the wide area cell or to be in receiving/listening mode.

2. Apparatus according to claim 1, wherein the apparatus is a base station, a node B, an evolved Node B, or part of a base station.

3. Apparatus according to claim 1 or 2, wherein the local area cell (3, 5, 7) is closely spaced, adjoining, or overlapping with respect to at least one other local area cell (3, 5, 7).

4. Apparatus according to any one of claims 1 to 3, wherein:
wide area cell operation and/or local area cell operation is adapted to hop between the same frequency carriers (f1 and f2); and
a hopping pattern of the local area cell is synchronized with a hopping pattern of the wide area cell.

5. Apparatus according to any one of claims 1 to 4, wherein:
a subframe of a transmission signal of the wide area cell provides the synchronization signal for a frequency carrier, and another subframe provides the synchronization signal for another frequency carrier;
the synchronization signal is received continuously;
information on a hopping pattern is sent to the local area cell through a wired connection or through a broadcast control channel;
broadcast control information contains any one or more, in any arbitrary combination, of information on hopping patterns, subframes that are allowed for T2T communication, allowed transmission powers in T2T, additional guard times/frequencies and any other information that may enable/support T2T communication;
frequency carriers are frequency carriers for multimedia broadcast multicast service, or are wide area or local area unicast frequency carriers;
load balancing/radio resource management based on different frequency hopping patterns is used between multimedia broadcast multicast service and local area, between two or more wide area unicast systems, or between wide area unicast system and local area system, or between multimedia broadcast multicast service and wide area unicast system.

6. An apparatus (2) of a wide area cell (1), comprising
a transceiver for transmitting a synchronization signal to a base station (4, 6, 8) of a local area cell (1, 3, 5), and
a synchronization signal generator for generating the synchronization signal,
**characterized in that**
the wide area cell is configured to provide a multimedia broadcast multicast service using two or more frequency carriers, and
the synchronization signal is configured such that the base station of the local area cell is synchronized to operate, at any time, on another frequency carrier than the apparatus of the wide area cell or to be in receiving/listening mode.

7. Apparatus according to claim 6, wherein the apparatus is a base station, a node B, an evolved Node B, or part of a base station.

8. Apparatus according to claim 6 or 7, wherein:
a subframe of a transmission signal of the wide area cell provides the synchronization signal for a frequency carrier, and another subframe provides the synchronization signal for another frequency carrier;
the synchronization signal is transmitted continuously;
information on a hopping pattern is sent to the local area cell through a wired connection or through a broadcast control channel;
broadcast control information contains any one or more, in any arbitrary combination, of information on hopping patterns, subframes that are allowed for T2T communication, allowed transmission powers in T2T, additional guard times/frequencies and any other information that may enable/support T2T communication;
frequency carriers are frequency carriers for multimedia broadcast multicast service, or are wide area or local area unicast frequency carriers;
load balancing/radio resource management based on different frequency hopping patterns is used between multimedia broadcast multicast service and local area, between two or more wide area unicast systems, or between wide area unicast system and local area system, or between multimedia broadcast multicast service and wide area unicast system.

9. A method comprising
receiving a synchronization signal from a base station (2) of a wide area cell (1), and
synchronizing a transceiver of a local area cell depending on the received synchronization signal,
**characterized in that**
the wide area cell is configured to provide a multimedia broadcast multicast service using two or more frequency carriers, and
the synchronization signal is configured such that the transceiver is synchronized to operate, at any time, on another frequency carrier than the base station of the wide area cell or to be in receiving/listening mode.

10. Method according to claim 9, wherein the method is operable at a base station, a node B, an evolved Node B, or part of a base station.

11. Method according to claim 9 to 10, wherein:
wide area cell operation and/or local area cell operation is hopping between the same frequency carriers (f1 and f2); and
a hopping pattern of the local area cell is synchronized with a hopping pattern of the wide area cell.

12. Method according to any one of claims 9 to 11, wherein:
a subframe of a transmission signal of the wide area cell provides the synchronization signal for a frequency carrier, and another subframe provides the synchronization signal for another frequency carrier;
the synchronization signal is received continuously;
information on a hopping pattern is sent to the local area cell through a wired connection or through a broadcast control channel;
broadcast control information contains any one or more, in any arbitrary combination, of information on hopping patterns, subframes that are allowed for T2T communication, allowed transmission powers in T2T, additional guard times/frequencies and any other information that may enable/support T2T communication;
frequency carriers are frequency carriers for multimedia broadcast multicast service, or are wide area or local area unicast frequency carriers;
the load balancing/radio resource management that is based on different frequency hopping patterns is used between multimedia broadcast multicast service and local area, between two or more wide area unicast systems, or between wide area unicast system and local area system, or between multimedia broadcast multicast service and wide area unicast system.

13. A method comprising
transmitting a synchronization signal from a base station (2) of a wide area cell (1) to a base station (4, 6, 8) of a local area cell (1, 3, 5), and
generating the synchronization signal,
**characterized in that**
the wide area cell is configured to provide a multimedia broadcast multicast service using two or more frequency carriers, and
the synchronization signal is configured such that the base station of the local area cell is synchronized to operate, at any time, on another frequency carrier than the base station of the wide area cell or to be in receiving/listening mode.

14. Method according to claim 13, wherein the method is operable at a base station, a node B, an evolved Node B, or part of a base station.

15. Method according to claim 13 or 14, wherein:
a subframe of a transmission signal of the wide area cell provides the synchronization signal for a frequency carrier, and another subframe provides the synchronization signal for another frequency carrier;
the synchronization signal is transmitted continuously;
information on a hopping pattern is sent to the local area cell through a wired connection or through a broadcast control channel;
broadcast control information contains any one or more, in any arbitrary combination, of information on hopping patterns, subframes that are allowed for T2T communication, allowed transmission powers in T2T, additional guard times/frequencies and any other information that may enable/support T2T communication;
frequency carriers are frequency carriers for multimedia broadcast multicast service, or are wide area or local area unicast frequency carriers;
the load balancing/radio resource management that is based on different frequency hopping patterns is used between multimedia broadcast multicast service and local area, between two or more wide area unicast systems, or between wide area unicast system and local area system, or between multimedia broadcast multicast service and wide area unicast system.

16. Computer program product, comprising code means configured to carry out or implement, when run on a processor, the method according to any one of claims 9 to 15.

17. Computer program product according to claim 16, embodied on a computer-readable medium.

## Patentansprüche

1. Vorrichtung (4, 6, 8) einer Lokalnetzzelle (3, 5, 7), umfassend
einen Sender/Empfänger (21) zum Empfangen eines Synchronisationssignals von einer Basisstation (2) einer Weitbereichsnetzzelle (1) und
ein Synchronisationsmittel (24) zum Synchronisieren der Übertragung des Sender/Empfängers (21) in Abhängigkeit von dem empfangenen Synchronisationssignal,
**dadurch gekennzeichnet, dass**
die Weitbereichsnetzzelle zum Bereitstellen eines Multimedien-Rundsende-Multicast-Dienstes mit zwei oder mehr Frequenzträgern eingerichtet ist, und
das Synchronisationssignal so eingerichtet ist, dass der Sender/Empfänger zum Betrieb zu jeder beliebigen Zeit auf einem anderen Frequenzträger als der Basisstation der Weitbereichsnetzzelle oder als im Empfangs-/Abhörmodus befindlich synchronisiert ist.

2. Vorrichtung nach Anspruch 1, wobei die Vorrichtung eine Basisstation, ein Node-B, ein entwickelter Node-B oder Teil einer Basisstation ist.

3. Vorrichtung nach Anspruch 1 oder 2, wobei die Lokalnetzzelle (3, 5, 7) eng beabstandet, hinsichtlich mindestens einer weiteren Lokalnetzzelle (3, 5, 7) benachbart oder überlappend ist.

4. Vorrichtung nach einem beliebigen der Ansprüche 1 bis 3, wobei
Weitbereichsnetzzellenbetrieb und/oder Lokalnetzzellenbetrieb zum Springen zwischen Trägern der gleichen Frequenz (f1 und f2) eingerichtet ist; und
ein Sprungmuster der Lokalnetzzelle mit einem Sprungmuster der Weitbereichsnetzzelle synchronisiert ist.

5. Vorrichtung nach einem beliebigen der Ansprüche 1 bis 4, wobei
ein Teilrahmen eines Übertragungssignals der Weitbereichsnetzzelle das Synchronisationssignal für einen Frequenzträger bereitstellt und ein weiterer Teilrahmen das Synchronisationssignal für einen anderen Frequenzträger bereitstellt;
das Synchronisationssignal fortlaufend empfangen wird; Informationen über ein Sprungmuster zu der Lokalnetzzelle durch eine drahtgebundene Verbindung oder durch einen Rundsendungs-Organisationskanal gesendet werden;
Rundsendungs-Steuerungsinformationen eine beliebige oder mehrere in willkürlicher Kombination von Informationen über Sprungmuster enthalten, Teilrahmen, die für T2T-Kommunikation (T2T = Terminal to Terminal - Endgerät-zu-Endgerät) zulässig sind, zulässige Übertragungsleistungen bei T2T, zusätzliche Schutzzeiten/Frequenzen und beliebige sonstige Informationen, die T2T-Kommunikation ermöglichen/unterstützen können;
Frequenzträger Frequenzträger für Multimedien-Rundsendungs-Multicast-Dienst sind oder Weitbereichsnetz- oder Lokalnetz-Unicast-Frequenzträger sind;
Lastausgleich-/Funkressourcenmanagement basierend auf unterschiedlichen Frequenzsprungmustern zwischen Multimedien-Rundsendungs-Multicast-Dienst und Lokalnetzsystemen, zwischen zwei oder mehr Weitbereichsnetz-Unicast-Systemen oder zwischen Weitbereichsnetz-Unicast-System und Lokalnetzsystem benutzt wird, oder zwischen Multimedien-Rundsendungs-Multicast-Dienst und Weitbereichsnetz-Unicast-System.

6. Vorrichtung (2) einer Weitbereichsnetzzelle (1), umfassend
einen Sender/Empfänger zum Übertragen eines Synchronisationssignals zu einer Basisstation (4, 6, 8) einer Lokalnetzzelle (1, 3, 5), und
einen Synchronisationssignalgenerator zum Erzeugen des Synchronisationssignals,
**dadurch gekennzeichnet, dass**
die Weitbereichsnetzzelle eingerichtet ist zum Bereitstellen eines Multimedien-Rundsendungs-Multicast-Dienstes mit zwei oder mehr Frequenzträgern, und
das Synchronisationssignal so eingerichtet ist, dass die Basisstation der Lokalnetzzelle zum Betrieb zu jeder beliebigen Zeit auf einem anderen Frequenzträger als die Vorrichtung der Weitbereichsnetzzelle oder als im Empfangs-/Abhörmodus befindlich synchronisiert ist.

7. Vorrichtung nach Anspruch 6, wobei die Vorrichtung eine Basisstation, ein Node-B, ein entwickelter Node-B oder Teil einer Basisstation ist.

8. Vorrichtung nach Anspruch 6 oder 7, wobei
ein Teilrahmen eines Übertragungssignals der Weitbereichsnetzzelle das Synchronisationssignal für einen Frequenzträger bereitstellt und ein weiterer Teilrahmen das Synchronisationssignal für einen anderen Frequenzträger bereitstellt;
das Synchronisationssignal fortlaufend übertragen wird; Informationen über ein Sprungmuster zur Lokalnetzzelle durch eine drahtgebundene Verbindung oder durch einen Rundsende-Organisationskanal gesendet werden;
Rundsende-Steuerungsinformationen eine beliebige oder mehrere in jeglicher willkürlicher Kombination von Informationen über Sprungmuster, Teilrahmen, die für T2T-Kommunikation zulässig sind, zugelassene Übertragungsleistungen bei T2T, zusätzliche Schutzzeiten/Frequenzen und beliebige sonstige Informationen enthalten, die T2T-Kommunikation ermöglichen/unterstützen können;
Frequenzträger Frequenzträger für Multimedien-Rundsendungs-Multicast-Dienst sind oder Weitbereichsnetz- oder Lokalnetz-Unicast-Frequenzträger sind;
Lastausgleichs-/Funkressourcenmanagement basierend auf unterschiedlichen Frequenzsprungmustern zwischen Multimedien-Rundsende-Multicast-Dienst und Lokalnetzsystemen, zwischen zwei oder mehr Weitbereichsnetz-Unicast-Systemen oder zwischen Weitbereichsnetz-Unicast-System und Lokalnetzsystem, oder zwischen Multimedien-Rundsendungs-Multicast-Dienst und Weitbereichsnetz-Unicast-System benutzt wird.

9. Verfahren, umfassend
Empfangen eines Synchronisationssignals von einer Basisstation (2) einer Weitbereichsnetzzelle (1), und
Synchronisieren eines Sender/Empfängers einer Lokalnetzzelle in Abhängigkeit von dem empfangenen Synchronisationssignal, **dadurch gekennzeichnet, dass**
die Weitbereichsnetzzelle eingerichtet ist zum Bereitstellen eines Multimedien-Rundsendungs-Multicast-Dienstes mit zwei oder mehr Frequenzträgern, und
das Synchronisationssignal so eingerichtet ist, dass der Sender/Empfänger zum Betrieb zu jeder beliebigen Zeit auf einem anderen Frequenzträger als der Basisstation der Weitbereichsnetzzelle oder als im Empfangs-/Abhörmodus befindlich synchronisiert ist.

10. Verfahren nach Anspruch 9, wobei das Verfahren an einer Basisstation, einem Node-B, einem entwickelten Node-B oder einem Teil einer Basisstation betreibbar ist.

11. Verfahren nach Anspruch 9 bis 10, wobei
Weitbereichsnetzzellenbetrieb und/oder Lokalnetzzellenbetrieb Springen zwischen den gleichen Frequenzträgern (f1 und f2) darstellt; und
ein Sprungmuster der Lokalnetzzelle mit einem Sprungmuster der Weitbereichsnetzzelle synchronisiert ist.

12. Verfahren nach einem beliebigen der Ansprüche 9 bis 11, wobei
ein Teilrahmen eines Übertragungssignals der Weitbereichsnetzzelle das Synchronisationssignal für einen Frequenzträger bereitstellt und ein weiterer Teilrahmen das Synchronisationssignal für einen anderen Frequenzträger bereitstellt;
das Synchronisationssignal fortlaufend empfangen wird; Informationen über ein Sprungmuster zu der Lokalnetzzelle durch eine drahtgebundene Verbindung oder durch einen Rundsendungs-Organisationskanal gesendet werden;
Rundsendungs-Steuerungsinformationen eine beliebige oder mehrere in einer willkürlichen Kombination von Informationen über Sprungmuster, Teilrahmen, die für T2T-Kommunikation zulässig sind, zugelassene Übertragungsleistungen bei T2T, zusätzliche Schutzzeiten/Frequenzen und beliebige sonstige Informationen enthalten, die T2T-Kommunikation ermöglichen/unterstützen können;
Frequenzträger Frequenzträger für Multimedien-Rundsendungs-Multicast-Dienst sind oder Weitbereichsnetz- oder Lokalnetz-Unicast-Frequenzträger sind;
das Lastausgleich-/Funkressourcenmanagement, das auf unterschiedlichen Frequenzsprungmustern basiert, zwischen Multimedien-Rundsendungs-Multicast-Dienst und LokalnetzSystemen, zwischen zwei oder mehr Weitbereichsnetz-Unicast-Systemen oder zwischen Weitbereichsnetz-Unicast-System und Lokalnetz-System, oder zwischen Multimedien-Rundsendungs-Multicast-Dienst und Weitbereichsnetz-Unicast-System benutzt wird.

13. Verfahren, umfassend
Übertragen eines Synchronisationssignals von einer Basisstation (2) einer Weitbereichsnetzzelle (1) zu einer Basisstation (4, 6, 8) einer Lokalnetzzelle (1, 3, 5) und
Erzeugen des Synchronisationssignals,
**dadurch gekennzeichnet, dass**
die Weitbereichsnetzzelle eingerichtet ist zum Bereitstellen eines Multimedien-Rundsendungs-Multicast-Dienstes mit zwei oder mehr Frequenzträgern, und
das Synchronisationssignal so eingerichtet ist, dass die Basisstation der Lokalnetzzelle zum Betrieb zu jeder beliebigen Zeit auf einem anderen Frequenzträger als der Basisstation oder der Weitbereichsnetzzelle oder als im Empfangs-/Abhörmodus befindlich synchronisiert ist.

14. Verfahren nach Anspruch 13, wobei das Verfahren an einer Basisstation, einem Node-B, einem entwickelten Node-B oder Teil einer Basisstation betreibbar ist.

15. Verfahren nach Anspruch 13 oder 14, wobei
ein Teilrahmen eines Übertragungssignals der Weitbereichsnetzzelle das Synchronisationssignal für einen Frequenzträger bereitstellt und ein weiterer Teilrahmen das Synchronisationssignal für einen anderen Frequenzträger bereitstellt;
das Synchronisationssignal fortlaufend übertragen wird; Informationen über ein Sprungmuster zur Lokalnetzzelle durch eine drahtgebundene Verbindung oder durch einen Rundsendungs-Organisationskanal gesendet werden;
Rundsendungs-Steuerinformationen eine beliebige oder mehrere in einer willkürlichen Kombination von Informationen über Sprungmuster, Teilrahmen, die für T2T-Kommunikation zulässig sind, zulässige Übertragungsleistungen bei T2T, zusätzliche Schutzzeiten/Frequenzen und beliebige sonstige Informationen enthalten, die T2T-Kommunikation ermöglichen/unterstützen können;
Frequenzträger Frequenzträger für Multimedien-Rundsendungs-Multicast-Dienst sind oder Weitbereichsnetz- oder Lokalnetz-Unicast-Frequenz-Träger sind;
Das Lastausgleich-/Funkressourcenmanagement, das auf unterschiedlichen Frequenzsprungmustern basiert, zwischen Multimedien-Rundsendungs-Multicast-Dienst und Lokalnetz-System, zwischen zwei oder mehr Weitbereichsnetz-Unicast-Systemen oder zwischen Weitbereichsnetz-Unicast-System und Lokalnetz-System oder zwischen Multimedien-Rundsendungs-Multicast-Dienst und Weitbereichsnetz-Unicast-System benutzt wird.

16. Computerprogrammprodukt, umfassend Codemittel eingerichtet zum Ausführen oder Implementieren bei Ablauf auf einem Prozessor des Verfahrens nach einem beliebigen der Ansprüche 9 bis 15.

17. Computerprogrammprodukt nach Anspruch 16, ausgeführt auf einem computerlesbaren Medium.

## Revendications

1. Un appareil (4, 6, 8) d'une cellule de zone locale (3, 5, 7), comprenant
un émetteur-récepteur (21) destiné à recevoir un signal de synchronisation provenant d'une station de base (2) d'une cellule de zone étendue (1), et
un moyen de synchronisation (24) destiné à synchroniser la transmission de l'émetteur-récepteur (21) en fonction du signal de synchronisation reçu,
**caractérisé en ce que**
la cellule de zone étendue est configurée de façon à fournir un service de multidiffusion de diffusion multimédia au moyen de deux ou plus porteuses de fréquence, et
le signal de synchronisation est configuré de sorte que l'émetteur-récepteur soit synchronisé de façon à fonctionner, à tout moment, sur une autre porteuse de fréquence que la station de base de la cellule de zone étendue ou à se trouver dans un mode d'écoute/réception.

2. Un appareil selon la revendication 1, dans lequel l'appareil est une station de base, un noeud B, un noeud B évolué ou une partie d'une station de base.

3. Un appareil selon la revendication 1 ou 2, dans lequel la cellule de zone locale (3, 5, 7) est étroitement espacée, contiguë ou en chevauchement par rapport à une autre cellule de zone locale (3, 5, 7).

4. Un appareil selon l'une quelconque des revendications 1 à 3, dans lequel :
le fonctionnement de la cellule de zone étendue et/ou le fonctionnement de la cellule de zone locale est adapté de façon à faire des sauts entre les mêmes porteuses de fréquence (f1 et f2), et
un motif de saut de la cellule de zone locale est synchronisé avec un motif de saut de la cellule de zone étendue.

5. Un appareil selon l'une quelconque des revendications 1 à 4, dans lequel :
une sous-trame d'un signal de transmission de la cellule de zone étendue fournit le signal de synchronisation pour une porteuse de fréquence, et une autre sous-trame fournit le signal de synchronisation pour une autre porteuse de fréquence,
le signal de synchronisation est reçu en continu,
des informations relatives à un motif de saut sont envoyées à la cellule de zone locale par l'intermédiaire d'une connexion câblée ou par l'intermédiaire d'un canal de commande de diffusion,
les informations de commande de diffusion contiennent un ou plusieurs éléments parmi, selon toute combinaison arbitraire, des informations relatives à des motifs de saut, des sous-trames qui sont autorisées pour une communication T2T, des puissances de transmission autorisées en T2T, des fréquences/temps de garde additionnels et toute autre information qui peut permettre/supporter une communication T2T,
les porteuses de fréquence sont des porteuses de fréquence pour un service de multidiffusion de diffusion multimédia, ou sont des porteuses de fréquence monodiffusion de zone locale ou de zone étendue,
une gestion des ressources radio/équilibrage de charges basée sur des motifs de saut de fréquence différents est utilisée entre un service de multidiffusion de diffusion multimédia et une zone locale, entre deux ou plus systèmes monodiffusion de zone étendue, ou entre un système monodiffusion de zone étendue et un système de zone locale, ou entre un service de multidiffusion de diffusion multimédia et un système monodiffusion de zone étendue.

6. Un appareil (2) d'une cellule de zone étendue (1), comprenant
un émetteur-récepteur destiné à la transmission d'un signal de synchronisation à une station de base (4, 6, 8) d'une cellule de zone locale (1, 3, 5), et
un générateur de signal de synchronisation destiné à générer le signal de synchronisation,
**caractérisé en ce que**
la cellule de zone étendue est configurée de façon à fournir un service de multidiffusion de diffusion multimédia au moyen de deux ou plus porteuses de fréquence, et
le signal de synchronisation est configuré de sorte que la station de base de la cellule de zone locale soit synchronisée de façon à fonctionner, à tout moment, sur une autre porteuse de fréquence que l'appareil de la cellule de zone étendue ou à se trouver dans un mode d'écoute/réception.

7. Un appareil selon la revendication 6, dans lequel l'appareil est une station de base, un noeud B, un noeud B évolué ou une partie d'une station de base.

8. Un appareil selon la revendication 6 ou 7, dans lequel :
une sous-trame d'un signal de transmission de la cellule de zone étendue fournit le signal de synchronisation pour une porteuse de fréquence, et une autre sous-trame fournit le signal de synchronisation pour une autre porteuse de fréquence,
le signal de synchronisation est transmis en continu,
des informations relatives à un motif de saut sont envoyées à la cellule de zone locale par l'intermédiaire d'une connexion câblée ou par l'intermédiaire d'un canal de commande de diffusion,
les informations de commande de diffusion contiennent un ou plusieurs éléments parmi, selon toute combinaison arbitraire, des informations relatives à des motifs de saut, des sous-trames qui sont autorisées pour une communication T2T, des puissances de transmission autorisées en T2T, des fréquences/temps de garde additionnels et toute autre information qui peut permettre/supporter une communication T2T,
les porteuses de fréquence sont des porteuses de fréquence pour un service de multidiffusion de diffusion multimédia, ou sont des porteuses de fréquence monodiffusion de zone locale ou de zone étendue,
une gestion des ressources radio/équilibrage de charges basée sur des motifs de saut de fréquence différents est utilisée entre un service de multidiffusion de diffusion multimédia et une zone locale, entre deux ou plus systèmes monodiffusion de zone étendue, ou entre un système monodiffusion de zone étendue et un système de zone locale, ou entre un service de multidiffusion de diffusion multimédia et un système monodiffusion de zone étendue.

9. Un procédé comprenant
la réception d'un signal de synchronisation provenant d'une station de base (2) d'une cellule de zone étendue (1), et
la synchronisation d'un émetteur-récepteur d'une cellule de zone locale en fonction du signal de synchronisation reçu,
**caractérisé en ce que**
la cellule de zone étendue est configurée de façon à fournir un service de multidiffusion de diffusion multimédia au moyen de deux ou plus porteuses de fréquence, et
le signal de synchronisation est configuré de sorte que l'émetteur-récepteur soit synchronisé de façon à fonctionner, à tout moment, sur une autre porteuse de fréquence que la station de base de la cellule de zone étendue ou à se trouver dans un mode d'écoute/réception.

10. Un procédé selon la revendication 9, dans lequel le procédé est actionnable sur une station de base, un noeud B, un noeud B évolué ou une partie d'une station de base.

11. Un procédé selon la revendication 9 ou 10, dans lequel :
le fonctionnement de la cellule de zone étendue et/ou le fonctionnement de la cellule de zone locale effectue des sauts entre les mêmes porteuses de fréquence (f1 et f2), et
un motif de saut de la cellule de zone locale est synchronisé avec un motif de saut de la cellule de zone étendue.

12. Un procédé selon l'une quelconque des revendications 9 à 11, dans lequel :
une sous-trame d'un signal de transmission de la cellule de zone étendue fournit le signal de synchronisation pour une porteuse de fréquence, et une autre sous-trame fournit le signal de synchronisation pour une autre porteuse de fréquence,
le signal de synchronisation est reçu en continu,
des informations relatives à un motif de saut sont envoyées à la cellule de zone locale par l'intermédiaire d'une connexion câblée ou par l'intermédiaire d'un canal de commande de diffusion,
les informations de commande de diffusion contiennent un ou plusieurs éléments parmi, selon toute combinaison arbitraire, des informations relatives à des motifs de saut, des sous-trames qui sont autorisées pour une communication T2T, des puissances de transmission autorisées en T2T, des fréquences/temps de garde additionnels et toute autre information qui peut permettre/supporter une communication T2T,
les porteuses de fréquence sont des porteuses de fréquence pour un service de multidiffusion de diffusion multimédia, ou sont des porteuses de fréquence monodiffusion de zone locale ou de zone étendue,
la gestion des ressources radio/équilibrage de charges qui est basée sur des motifs de saut de fréquence différents est utilisée entre un service de multidiffusion de diffusion multimédia et une zone locale, entre deux ou plus systèmes monodiffusion de zone étendue, ou entre un système monodiffusion de zone étendue et un système de zone locale, ou entre un service de multidiffusion de diffusion multimédia et un système monodiffusion de zone étendue.

13. Un procédé comprenant
la transmission d'un signal de synchronisation provenant d'une station de base (2) d'une cellule de zone étendue (1) à une station de base (4, 6, 8) d'une cellule de zone locale (1, 3, 5), et
la génération d'un signal de synchronisation,
**caractérisé en ce que**
la cellule de zone étendue est configurée de façon à fournir un service de multidiffusion de diffusion multimédia au moyen de deux ou plus porteuses de fréquence, et
le signal de synchronisation est configuré de sorte que la station de base de la cellule de zone locale soit synchronisée de façon à fonctionner, à tout moment, sur une autre porteuse de fréquence que la station de base de la cellule de zone étendue ou à se trouver dans un mode d'écoute/réception.

14. Un procédé selon la revendication 13, dans lequel le procédé est actionnable sur une station de base, un noeud B, un noeud B évolué ou une partie d'une station de base.

15. Un procédé selon la revendication 13 ou 14, dans lequel :
une sous-trame d'un signal de transmission de la cellule de zone étendue fournit le signal de synchronisation pour une porteuse de fréquence, et une autre sous-trame fournit le signal de synchronisation pour une autre porteuse de fréquence,
le signal de synchronisation est transmis en continu,
des informations relatives à un motif de saut sont envoyées à la cellule de zone locale par l'intermédiaire d'une connexion câblée ou par l'intermédiaire d'un canal de commande de diffusion,
les informations de commande de diffusion contiennent un ou plusieurs éléments parmi, selon toute combinaison arbitraire, des informations relatives à des motifs de saut, des sous-trames qui sont autorisées pour une communication T2T, des puissances de transmission autorisées en T2T, des fréquences/temps de garde additionnels et toute autre information qui peut permettre/supporter une communication T2T,
les porteuses de fréquence sont des porteuses de fréquence pour un service de multidiffusion de diffusion multimédia, ou sont des porteuses de fréquence monodiffusion de zone locale ou de zone étendue,
une gestion des ressources radio/équilibrage de charges qui est basée sur des motifs de saut de fréquence différents est utilisée entre un service de multidiffusion de diffusion multimédia et une zone locale, entre deux ou plus systèmes monodiffusion de zone étendue, ou entre un système monodiffusion de zone étendue et un système de zone locale, ou entre un service de multidiffusion de diffusion multimédia et un système monodiffusion de zone étendue.

16. Un programme informatique, comprenant un moyen de code configuré de façon à exécuter ou mettre en oeuvre, lorsqu'il est exécuté sur un processeur, le procédé selon l'une quelconque des revendications 9 à 15.

17. Un programme informatique selon la revendication 16 incorporé dans un support lisible par ordinateur.
